# EUROPEAN PATENT APPLICATION

(11) **EP 4 372 605 A1**
(43) Date of publication of application: **22.05.2024**
(21) Application number: 22208200.0
(22) Date of filing: 18.11.2022
(51) Int. Cl.: G06F 40/247, G06F 40/30, G06F 40/279

(54) **METHOD AND SYSTEM FOR IDENTIFICATION OF LINGUISTIC INFORMATION**

(71) Applicant: VOLKSWAGEN AG, 38440 Wolfsburg (DE)
(72) Inventor: Asgari, Dr. Ehsaneddin, 85757 Karlsfeld (DE); Braune, Dr. Fabienne, 80637 München (DE)

(57) **Abstract**

The present invention relates to a computer-implemented method (100) for identification of linguistic information in a text. The method (100) comprising:
- training (101) a mathematical model to automatically detect synonyms in a text,
- automatically tune (103) the mathematical model (219) to achieve the highest possible identification rate,
- outputting (105) an indicator for two words being synonyms,

wherein training (101) comprises providing input text to the mathematical model (219) that comprises annotated synonyms,
wherein the mathematical model (219) is configured to calculate a value for a plurality of classification levels (205, 207, 209, 211), and
wherein tuning (103) comprises adjusting only weighting values for weighting an influence of an output of a particular classification level (205, 207, 209, 211).

## Description

The present invention relates to a method, a system and a computer program product for identification of linguistic information in a text, according to the attached claims.

In order to analyze reports of issues in customer complaints, analysts often face many different wordings for the same error, which are known as synonyms. As they cannot automatically group synonyms, analysts lose time exploring customer complaints for each word.

Embedding-based similarities are proposed and used in the literature. These methods only use language-model-based embeddings and cannot distinguish between synonyms and antonyms as these can be used interchangeably. As synonyms are subjective, detection and grouping depend on use cases.

US 2019/0155877 A1 describes a word generation model that obtains textual content and generates a targeted summary of the textual content.

Against this background, it is a problem to be solved to provide for a possibility to identify a large number of synonyms and/or antonyms in a text.

According to a first aspect of the present invention, a computer-implemented method for identification of linguistic information in a text or text collection is disclosed.

The method according to the present invention comprises training a mathematical model to automatically detect synonyms in a text, automatically tune the mathematical model to achieve the highest possible identification rate, outputting an indicator for two words being synonyms, wherein training comprises providing input text to the mathematical model that comprises annotated synonyms, wherein the mathematical model is configured to calculate a value for a plurality of classification levels, and wherein tuning comprises adjusting only weighting values for weighting an influence of an output of a particular classification level.

In the context of the present invention a classification level is to be understood as a classification process that is carried out in a particular context and provides a particular output. Thus, a plurality of classification levels provides for a plurality of outputs, i.e. output parameters. The present invention is based on the principle that a mathematical model, such as a regression model or a neural network, is trained in at least two steps, i.e. by a first training step in which an annotated list of word pairs is provided and the model adapts its inner state in order to provide for an output that matches the annotation as best as possible and a second tuning step.

In the training step, the mathematical model is configured to calculate a value for a plurality of classification levels that is used for the subsequent tuning step. Thus, in the tuning step the values provided by the particular classification levels are weighted by using a weighting factor. In other words, the impact of each parameter i.e. the influence of contributing parameters in defining a synonym in a particular use case is measured and quantified.

Since the training step and the tuning step are independent from each other, the tuning can be carried out separately from the training and be based on other data than the training data, for example. In particular, two different texts in two different languages may be used for training and tuning.

Based on an automatic recognition of synonyms, one or more texts can be analyzed for related context, i.e. text passages that address the same context. Thus, the text can be marked or segmented in order to identify text portions that fit together in their context. For example, a number of messages relating to a specific problem with a computational error in a car may be marked with a specific color or grouped together in order to enable a reader to identify all messages relating to the computational error within a huge number of messages.

Further, the method disclosed herein is computer-implemented. Thus, a computer, such as central processing unit, a control unit, a sub-processor, computer network or any other programmable computational unit, may be used to carry out the method disclosed herein.

According to an embodiment, the plurality of classification levels comprises at least one of a surface form, a word type, pointwise mutual information and embedding based similarity.

A surface form is the form of characters of words, such as the similarity between characters of two words.

A word type is a grammatical categorization of a word, such as a noun, a verb or an adjective, for example.

Pointwise mutual information is a measure of association. It compares the probability of two events, such as two words, occurring together in a sentence of a paragraph, for example.

Embedding based similarity means sematic or syntactic similarity based on values in the continuous vector space.

According to another embodiment, the training comprises providing input text to the mathematical model that comprises positively and negatively annotated synonyms.

By using both, positively and negatively annotated synonyms, the mathematical model can adapt itself to recognize not only the presence of synonyms but also the absence of synonyms.

According to another embodiment, the training comprises providing input text to the mathematical model that comprises annotated antonyms.

By providing information about two words being antonyms, the mathematical model can adapt itself to recognize not only the presence of synonyms but also the presence of antonyms, which also provides for an indicator that no synonyms are present in this context.

According to another embodiment, the mathematical model comprises a regression model.

A regression model has been shown as a reliable tool for recognizing synonyms and/or antonyms in a text automatically.

According to another embodiment, the method comprises grouping words being identified as synonyms.

By grouping words and/or their textual context, such as paragraphs they are mentioned in, a context specific analysis of a text can be provided. In other words, all text related to a particular word or synonym is grouped. Thus, a reader can identify all text passages being related to a specific topic.

According to another embodiment, the method comprises outputting an indicator for two words being synonyms, antonyms or neutral to each other.

An indicator for two words being synonyms, antonyms or neutral to each other may be a color, a number, such as a probability, a frame, a color scheme or any other marker that marks a plurality of words being related or each other.

According to another embodiment, the method comprises using the output for query expansion in a search engine.

In order to identify text portions that are related in their context, one or more words may be searched in a search engine. These words may be automatically extended by using synonyms and/or antonyms identified by using the method disclosed herein.

According to another embodiment, the method comprises providing the output to an application software, wherein the application software is configured to execute an avatar that is configured to adapt its dialogue structure automatically based on the provided output. This means, that the output provided by the tuned mathematical model is transmitted to the application and processed further within in the logic of the application.

An application software, i.e. a software that is implemented on a computing device, such as smartphone, for example, can make use of information about two words being synonyms in automatic manner, by treating both words identical, i.e. by responding to both words with the same function executing a particular dialogue routine.

According to another embodiment, the method comprises marking text as being related to a particular category in case the text comprises a synonym for the category.

By using categories, such as technical categories of a technical system, for example, a reader can be provided with all text passages being related to this category. Thus, an expert for engine failures may be provided with all messages being related to engine problems, for example.

According to another embodiment, the mathematical model is trained using text in a first language and tuned using text in a second language that is different from the first language.

Since the method disclosed herein is based on two independent configuration steps, the training may be carried out in a first language, thereby adopting the mathematical model in order to identify synonyms and/or antonyms based on different classification levels, such as a surface form, a word type, pointwise mutual information and embedding based similarity of the first language. In the second step, the knowledge stored in the mathematical model may be transferred to a second language by adopting weights between the classification levels. This means, a totally new training of the mathematical model for a second language can be avoided.

According to a second embodiment, the present invention relates to a data processing apparatus configured to carry out an embodiment of the method disclosed herein.

In particular, the data processing apparatus may be a central processing unit, a control unit, a sub-processor, a computer network or any other programmable computational unit that can be used to carry out the method disclose herein.

According to a third aspect, the present invention relates to a computer program product comprising instructions which, when the program is executed by a computer, cause the computer to carry out an embodiment of the method disclosed herein.

Further advantages, features and details of the invention unfold from the following description, in which embodiments of the present invention are described in detail. Thereby, the features from the claims as well as the features mentioned in the description can be essential for the invention as taken alone or in an arbitrary combination. In the drawings, there is schematically shown:
- Fig. 1: an embodiment of the method disclosed herein,
- Fig. 2: a mathematical model of the method according to Fig. 1 in detail,
- Fig. 3: a data processing apparatus for processing data according to the method shown in Fig. 1.

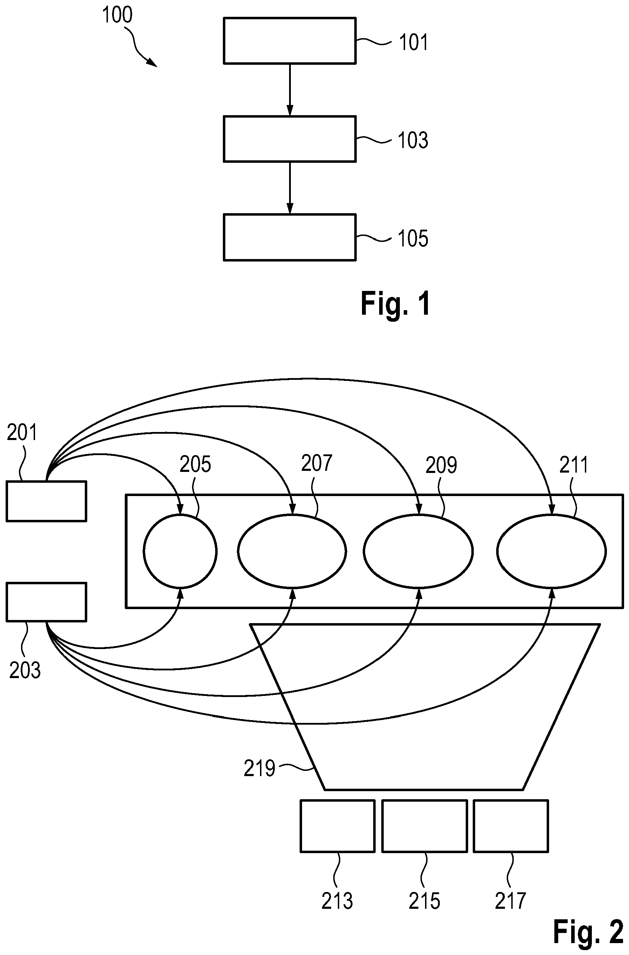

In Fig. 1, a method 100 for identification of linguistic information in a text is shown.

The method 100 comprises a training step 101, in which a mathematical model is trained to automatically detect synonyms in a text, a tuning step 103, in which the mathematical model is tuned to achieve the highest possible identification rate, and an output step 105, in which an indicator for two words being synonyms is output on an output device, such as a screen, for example.

In the training step 101 input text is provided to the mathematical model that comprises annotated synonyms.

In the training step 101, the mathematical model is configured to calculate a value for a plurality of classification levels.

In the tuning step 103, only weighting values for weighting an influence of an output of a particular classification level are adjusted. Thus, the training step 101 is carried out independently from the tuning step 103. The tuning step 103 may be carried out automatically in order to find the configuration of weighting values that provide for the highest classification rates.

As soon as the mathematical model is trained and tuned, a text can be analyzed for containing synonyms. By using the information about text passages containing words being synonyms, the text passages may be linked or marked as being related to each other. Thus, a reader can screen long text efficiently for text passages being related to each other in their context.

In Fig. 2 the concept underlying the method 100 is shown in detail. For example, a key word 201 is given by a reader via an interface, such as a text program on a computer.

A mathematical model 219 analyses a given text by computing whether a candidate word 203 is a synonym for the key word 201. This is done in four different and independent classification levels, 205, 207, 209 and 211.

Classification level 205 is configured for analyzing the text for a surface form, classification level 207 is configured for analyzing a word type, classification level 209 is configured for analyzing pointwise mutual information and classification level 211 is configured for analyzing embedding based similarity. Thus, each of classification levels 205, 207, 209 and 211 outputs a result for the candidate word 203 being a synonym to the key word 201.

Further, the mathematical model 219 is configured to calculate a final classification result for classifying the candidate word 203 to one of groups synonym 213, antonym 215 or neutral 217 by integrating the results provided by each of the classification levels 205, 207, 209 and 211 using weighting values for each of them. Thus, classification level 205 may be considered as more relevant for the identification of a synonym than classification level 207. Accordingly, classification level 205 has a weighting value of 8, whereas classification level 207 has a weighting value of 3.

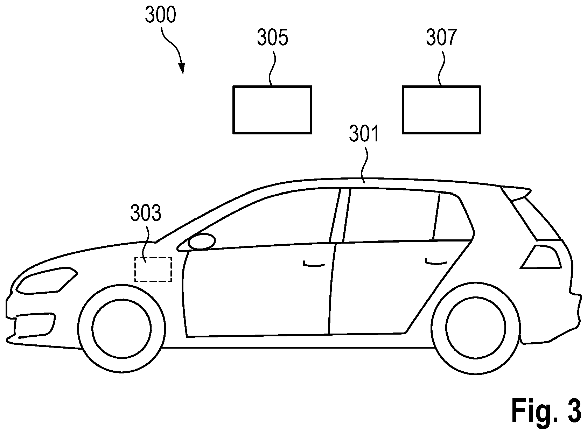

In Fig. 3 a data processing apparatus 300 is shown that is configured for automatically grouping error messages provided by a car 301. In case a failure in an engine 303 occurs, the driver of the car 301 may send an error report to a server 305 containing the text "motor making noise". The server 305 carries out the method 100 and identifies the word "motor" as being a synonym to "engine". Thus, the error report is automatically grouped with other messages relating to engine failures and transmitted to a screen 307 of an expert for engine failures.

### Reference-signs

- 100: method
- 101: training step
- 103: tuning step
- 105: outputting step
- 201: key word
- 203: candidate word
- 205: classification level
- 207: classification level
- 209: classification level
- 211: classification level
- 213: group synonym
- 215: group antonym
- 217: group neutral
- 219: mathematical model
- 300: processing apparatus
- 301: car
- 303: engine
- 305: server
- 307: screen

## Claims

1. Computer-implemented method (100) for identification of linguistic information in a text, the method (100) comprising:
- training (101) a mathematical model to automatically detect synonyms in a text,
- automatically tune (103) the mathematical model (219) to achieve the highest possible identification rate,
- outputting (105) an indicator for two words being synonyms,
wherein training (101) comprises providing input text to the mathematical model (219) that comprises annotated synonyms,
wherein the mathematical model (219) is configured to calculate a value for a plurality of classification levels (205, 207, 209, 211), and
wherein tuning (103) comprises adjusting only weighting values for weighting an influence of an output of a particular classification level (205, 207, 209, 211).

2. Method (100) according to claim 1,
**characterized in that,**
the plurality of classification levels (205, 207, 209, 211) is configured to analyze at least one of a surface form, a word type, pointwise mutual information and embedding based similarity.

3. Method (100) according to claim 1 or 2,
**characterized in that,**
the training (101) comprises providing input text to the mathematical model (219) that comprises positively and negatively annotated synonyms.

4. Method (100) according to any of the preceding claims,
**characterized in that,**
the training (101) comprises providing input text to the mathematical model (219) that comprises annotated antonyms.

5. Method (100) according to any of the preceding claims,
**characterized in that,**
the mathematical model (219) comprises a regression model.

6. Method (100) according to any of the preceding claims,
**characterized in that,**
the method (100) comprises:
- grouping words being identified as synonyms.

7. Method (100) according to any of the preceding claims,
**characterized in that,**
the method (100) comprises:
- outputting an indicator for two words being synonyms, antonyms or neutral to each other.

8. Method (100) according to any of the preceding claims,
**characterized in that,**
the method (100) comprises:
- using the output for query expansion in a search engine.

9. Method (100) according to any of the preceding claims,
**characterized in that,**
- providing the output to an application software,
wherein the application software is configured to execute an avatar that is configured to adapt its dialogue structure automatically based on the provided output.

10. Method (100) according to any of the preceding claims,
**characterized in that,**
the method comprises:
- using the output to automatically detect a topic in a text.

11. Method (100) according to any of the preceding claims,
**characterized in that,**
the method (100) comprises:
- marking text as being related to a particular category in case the text comprises a synonym for the category.

12. Method (100) according to any of the preceding claims,
**characterized in that,**
the mathematical model (219) is trained using text in a first language and tuned using text in a second language that is different from the first language.

13. Data processing apparatus (300) configured to carry out a method (100) according to any of claims 1 to 12.

14. Computer program product comprising instructions which, when the program is executed by a computer, cause the computer to carry out the method (100) according to any of claims 1 to 12.
